## Europäisches Patentamt
## European Patent Office
## Office européen des brevets

(19)

(11) Numéro de publication: **0 194 917**
**B1**

(12)
# FASCICULE DE BREVET EUROPEEN

(45) Date de publication du fascicule du brevet:
**20.04.88**

(51) Int. Cl.⁴: **B 60 Q 1/14**

(21) Numéro de dépôt: **86400417.1**

(22) Date de dépôt: **26.02.86**

(54) **Commutateur à plusieurs fonctions pour véhicule automobile.**

(30) Priorité: **01.03.85 FR 8503055**

(43) Date de publication de la demande:
**17.09.86 Bulletin 86/38**

(45) Mention de la délivrance du brevet:
**20.04.88 Bulletin 88/16**

(84) Etats contractants désignés:
**DE GB IT**

(56) Documents cités:
**FR - A - 2 515 865**
**FR - A - 2 517 111**

(73) Titulaire: **JAEGER, 2, rue Baudin,**
**F-92303 Levallois-Perret (FR)**

(72) Inventeur: **Clerin, Michel, 29, Place des Erables,**
**F-78260 Acheres (FR)**
Inventeur: **Auffray, Jean-Pierre, 101 Bis, rue Baratier,**
**F-95100 Argenteuil (FR)**

(74) Mandataire: **Martin, Jean-Jacques et al, Cabinet**
**REGIMBEAU 26, Avenue Kléber, F-75116 Paris (FR)**

ACTORUM AG

## Description

La présente invention a pour but de perfectionner les commutateurs à plusieurs fonctions décrits et représentés dans la demande de brevet français publiée sous le numéro 2 515 865, ainsi que dans la demande de certificat d'addition publiée sous le numéro 2 517 111 s'y référant.

La présente invention concerne plus précisément les commutateurs à plusieurs fonctions utilisés dans les véhicules automobiles pour commander à partir d'un même levier de manœuvre l'indication de changement de direction, l'allumage des différentes intensités d'éclairage ainsi que les avertisseurs sonores et lumineux et notamment le dispositif permettant la commande de l'éclairage ainsi que la fonction dite «d'appels lumineux».

Les commutateurs conformes à la présente invention ainsi que ceux décrits dans la demande de brevet français 2 515 865 et dans la demande de certificat d'addition français 2 517 111 comprennent un levier de manœuvre susceptible d'être animé d'un mouvement de translation axiale pour assurer la fonction «avertisseurs sonores», d'un mouvement de rotation autour d'un point de son axe de façon à prendre deux positions stables correspondant à la commande des indicateurs de changement de direction, d'un mouvement de basculement autour du même point, mais dans un plan perpendiculaire, au cours duquel le levier occupe une position instable correspondant à la fonction «appels lumineux» et commutation phares-codes, et un mouvement de rotation autour de son axe définissant trois positions stables correspondant, la première, à la situation «éclairage du véhicule éteint», la deuxième, à la situation «éclairage en configuration ville», la troisième, à la situation «éclairage en configuration route».

Un basculement instable du levier de commutateur conforme à la demande de brevet français 2 515 865 permet en situation «éclairage du véhicule éteint» d'obtenir un appel lumineux en phares, et, en situation «éclairage en configuration ville», d'obtenir un appel lumineux en codes.

Un basculement instable du levier du commutateur conforme à la demande de certificat d'addition français 2 517 111 permet, en situation «éclairage du véhicule éteint» et en situation «éclairage en configuration ville», d'obtenir un appel lumineux en phares.

En situation «éclairage en configuration route», l'éclairage des codes est initialement commandé, le basculement instable du levier commande ensuite l'éclairage des phares, ceux-ci restant allumés même après retour du levier, et un deuxième basculement permettant ensuite de revenir en éclairage «codes».

Pour assurer ces différentes fonctions, les commutateurs conformes à la présente invention ainsi que ceux décrits dans la demande de brevet français 2 515 865 et dans la demande de certificat d'addition français 2 517 111 comprennent deux arbres portant une pluralité de cames, traversés axialement par le levier de manœuvre, un premier arbre menant étant lié à rotation avec le levier de manœuvre et les deux arbres étant rendus solidaires en rotation avec perte de course relative entre ces deux arbres, le levier étant en outre susceptible, par rapport aux arbres, de déplacement axial pour la commande des avertisseurs sonores, d'un premier basculement autour d'un point de l'axe pour commander les indicateurs de changement de direction, et d'un second basculement, instable, dans un plan orthogonal au premier pour commander les appels lumineux, une came d'indexage à trois positions et une came de commande de l'éclairage en position «lanternes» solidaires du premier arbre, tandis que le second arbre, mené, porte une came de commande de l'éclairage en position «codes», une came de commande de l'éclairage en position «phares», une came d'indexation en position instable du levier et une came de manœuvre en rotation du second arbre, mené, par rapport au premier arbre menant, la came de manœuvre étant commandée par un cliquet mobile actionné par la partie avant du levier lors du mouvement de basculement instable du levier.

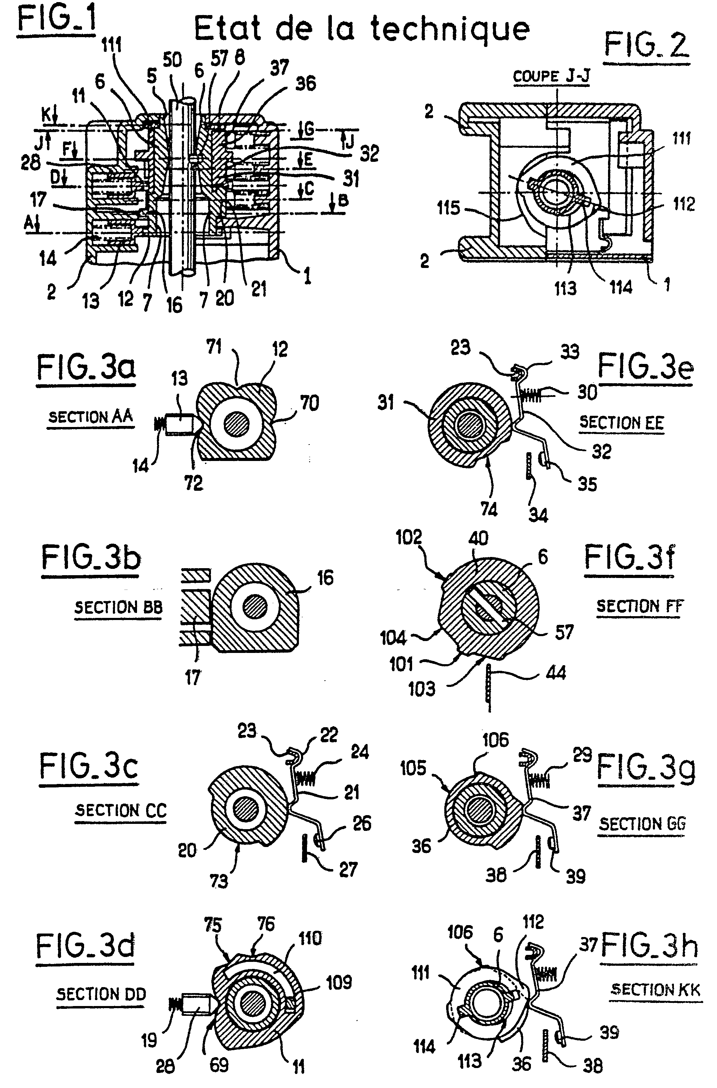

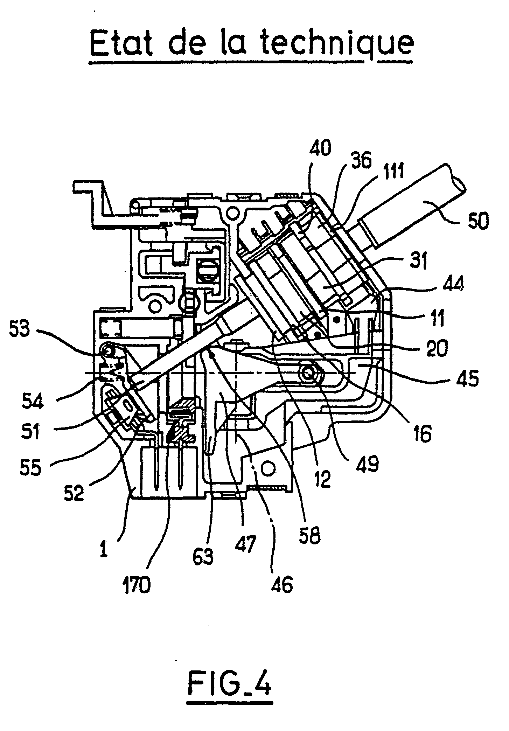

On va dans un premier temps rappeler la structure du commutateur décrit dans le certificat d'addition français 2 517 111 en regard des figures 1 à 3 annexées similaires aux figures 1 à 3 du certificat d'addition français 2 517 111 et en regard de la figure 4 annexée similaire à la figure 2 de la demande de brevet français 2 515 865; sur les figures annexées:

— la figure 1 représente une vue en coupe axiale des arbres à cames du commutateur,

— la figure 2 représente une vue en coupe transversale d'une came de rappel, selon un plan de coupe référencé J-J sur la figure 1,

— les figures 3a, 3b, 3c, 3d, 3e, 3f, 3g et 3h représentent différentes vues en coupe transversale des cames selon des plans de coupe respectifs référencés sur la figure 1, et

— la figure 4 représente une vue en coupe du commutateur.

Le commutateur représenté sur les figures 1 à 4 annexées, comprend un boîtier en deux parties: une coquille inférieure 1 et une coquille supérieure 2. Dans une des parois de la coquille inférieure 1 est découpé un berceau sur lequel vient se placer la partie rétreinte 5 du canon 6 d'un premier arbre à cames 7. Le canon 6 possède une section transversale intérieure biconique et il est introduit dans le canon coopérant d'un deuxième arbre à cames 8. Les deux arbres à cames sont traversés par le levier de manœuvre 50. Le premier arbre à cames 7 est lié à rotation avec le levier 50 par l'intermédiaire d'une goupille 57. Les deux arbres à cames sont rendus solidaires à rotation, avec perte de course, au moyen d'un téton 109 (figure 3d) de l'arbre 7 circulant dans un secteur de couronne 110 creusé dans une des cames 11 d'indexation code-phare du second arbre à cames 8.

L'arbre à cames 7 comporte une came d'indexage 12 (figure 3a), une came de butée 16 (figure 3b) et une came de commande lanternes 20 (figure 3c).

La came d'indexage 12 coopère avec un plot 13 rappelé en pression sur la came par un ressort 14.

La came 12 indexe en rotation les trois positions du levier: éclairage éteint, éclairage en situation ville et en situation en position route. Pour cela, elle est découpée de trois crans disposés à 90° l'un par rapport à l'autre, la quatrième face de la came étant plane.

La came 16 (figure 3b) dont le profil général s'inscrit dans un rectangle présente une face dont le profil est arrondi en demi-cercle, tandis que sa face opposée est plane et se trouve alignée avec la face, également plane, de la came 12. Ladite came 16 coopère avec une butée 17 solidaire du boîtier supérieur 2 de façon à limiter la rotation de l'ensemble à 180°. La partie de l'arbre à cames 7 comprise entre les cames 12 et 16 est logée en appui, d'une part dans un berceau du boîtier inférieur 1 et d'autre part sur une portée solidaire du boîtier supérieur 2.

La came 20 de commande de l'éclairage «lanternes» (figure 3c) est en appui sur une lame articulée 21 dont une extrémité recourbée 22 est maintenue sous une barrette 23 semi-cylindrique reliée à une connexion de la source de tension positive. L'autre extrémité de la lame 21 porte un plot 26 qui coopère avec une connexion lanternes 27 liée à la sortie de commande de l'éclairage «lanternes». La came 20 est découpée d'un profil bas 73 sur un secteur d'environ 140° qui, lorsqu'il est en regard de la lame 21, permet le contact du plot 26 et de la connexion 27, la lame 21 étant sollicitée par ressort 24 vers la connexion 27.

L'arbre à cames 8 porte une came 11 d'indexation code-phare en position instable du levier de manœuvre (figure 3d), une came de commande code 31 (figure 3e), une came de commande phares 36 (figure 3g) et une came 40 de commande en rotation de l'arbre 8 (figure 3f).

La came 11 d'indexation coopère avec un poussoir 28 (figure 3d), rappelée par un ressort 19.

A la suite se trouve la came codes 31 (figure 3e) qui coopère avec une lame articulée 32 rappelée par ressort 30 laquelle est maintenue sous la barrette 23 par son extrémité recourbée 33 et établit ou non un contact avec une connexion code 34 par l'intermédiaire du plot 35, selon que ladite lame est en contact ou non avec le profil bas 74 de la came, qui correspond à un secteur de 70° environ. La came «phares» 36 (figure 3g) est munie d'une saillie 106 et d'un profil bas (105) permettant l'établissement d'un contact entre une lame 37 rappelée par ressort 29 et une connexion phare 38 par l'intermédiaire du plot 39.

Entre la came «phares» 36 et la came «codes» 31 se trouve une came 40 (figure 3f) de manœuvre en rotation de l'arbre 8 par rapport à l'arbre 7. Cette came 40 comprend deux profils 103, 104 délimités par deux dents 101, 102 et coopère avec la palette 44 d'un cliquet mobile 45 actionné par la partie avant du levier, par l'intermédiaire d'un bâti 47, lors du mouvement de basculement instable du levier. L'un des profils 103 possède une rampe, l'autre profil 104 possède deux rampes.

Le bâti 47 qui repose contre la partie avant du levier 50 par une arête 58 est monté à rotation sur le boîtier du commutateur autour d'un axe 49 transversal à l'axe du levier (et perpendiculaire au plan de la figure 4).

Le bâti 47 est rappelé dans la position représentée sur la figure 4 par un ressort intercalé entre le boîtier et un bras 63 du bâti.

Le cliquet 45 est lui-même monté à rotation sur le bâti 47 autour d'un axe 46 transversal à l'axe 49 et parallèle au plan de la figure 4.

Le basculement du levier 50 parallèlement au plan de la figure 4 induit le pivotement du bâti 47 autour de l'axe 49 et l'engagement de la palette 44 avec la came de manœuvre en rotation 40.

De plus, une palette 52 est montée pivotante sur le boîtier en regard de l'extrémité 51 du levier, autour d'un axe 53 parallèle à l'axe 49. La palette 52 est rappelée en appui contre le levier 50 par un ressort 54.

Une lame de contact 55 est maintenue en appui sur la palette 52 et coopère lors du mouvement de rotation de celle-ci provoqué par un mouvement de translation du levier de manœuvre, avec une connexion de contact (non représentée) solidaire du boîtier, pour fermer le circuit avertisseur sonore.

Le basculement du levier 50 perpendiculairement au plan de la figure 4 déplace dans le même sens un équipage mobile 170 apte à commander les indicateurs de changement de direction.

Le levier de manœuvre 50 est muni d'une goupille 57 qui circule dans une lumière axiale du canon 6 pour entraîner celui-ci en rotation. Ainsi, l'arbre à cames 7 et le levier de manœuvre se trouvent annexés dans trois positions stables: éclairage éteint, position ville et position route, par la came 12 et le plot 13 (figure 3a). Dans ces trois positions stables, le levier 50 est animé d'un mouvement de basculement centré autour de la goupille 57 pour permettre l'actionnement des moyens indicateurs de changement de direction, et des moyens de commande d'appel lumineux.

En position «éclairage éteint», le plot 13 est dans le creux 72 de la came 12 et les lames 21, 32 et 37 sont écartées des connexions 27, 34 et 38 par les cames 20, 31 et 36. Toujours dans cette position, «éclairage éteint», la palette 44 du cliquet mobile circule sur le profil 103 de la came 40 et, lorsque l'on bascule le levier 50, elle rencontre la dent 101 et agit sur celle-ci pour entraîner, en même temps que la came 40, l'arbre à cames 8 d'un angle compris dans le débattement du téton 109 dans le secteur 110 (figure 3d), de façon à ne pas modifier la position de l'arbre à cames 7. Dans ce mouvement, le profil bas 105 de la came 36 de commande des phares agit sur la lame 37 pour placer celle-ci en position travail, réalisant ainsi un appel «phares», tandis que le plot 28 circule sur la rampe 69 de la came d'indexage 11 dont le profil est tel que ledit plot a tendance à retomber dans sa position initiale dès que la pression exercée sur le levier de manœuvre 50 se relâche, entraînant dans ce mouvement la came 11 et l'arbre à cames 8, pour remettre le système dans sa position initiale «éclairage éteint».

La rotation de 90° du levier de manœuvre 50 le fait ensuite passer dans sa position «éclairage ville». Le plot 13 est dans le creux 71 de la came 12. L'arbre à cames 7 ayant lui aussi tourné de 90°, le profil bas 73 (figure 3c) de la came 20 est au contact de la lame 21, laquelle établit donc le contact entre le plot 26 et la connexion 27, l'éclairage est normalement allumé en position «lanternes». Dans ce mouvement du levier 50, en raison de l'ouverture de l'angle du secteur 110 dans lequel circule le téton 109, l'arbre à cames 8 n'a pas été entraîné par la rotation de l'arbre 7 (les lames 32 et 37 restent écartées des connexions 34 et 38 par les cames 31 et 36) ; c'est donc toujours le profil 103 de la came 40 qui coopère avec la palette 44 du cliquet mobile et, lors de la mise en position instable du levier 50, le mouvement de l'arbre 8 sera le même que précédemment, on aura toujours un appel «phares».

Une nouvelle rotation dans le même sens, du levier 50, pour le faire passer dans la position «éclairage ville» porte le plot 13 dans le creux 70 de la came 12 et entraîne, cette fois, les arbres à cames 7 et 8 de sorte que le profil bas 73 de la came «lanternes» 20 et le profil bas 74 de la came «codes» 31 sont l'un et l'autre en face de leur lame associée pour actionner les éclairages «lanternes» et «codes». La palette 44 du cliquet mobile est au contact du profil 104 à double rampe de la came 40 et le plot d'indexage 28 est placé dans le creux 75 de la came 11.

Lorsque l'on agit sur le levier 50 pour le basculer en position instable parallèlement au plan de la figure 4, la palette 44 du cliquet parcourt l'une des rampes du profil 104 jusqu'à ce qu'elle rencontre la dent 101 entraînant l'arbre à cames 8 jusqu'à ce que le plot 28 se retrouve dans le creux 76 de la came 11 dont le profil est tel qu'il ne puisse s'échapper même lorsque le levier revient en position stable. On obtient donc une nouvelle position stable de l'arbre à cames 8 pour laquelle le profil bas 105 de la came phares 36 coopère avec la lame 37 pour permettre le contact du plot 38 et de la connexion 39 et l'allumage des phares.

Dans le même temps, la palette 44 se trouve en face de l'autre rampe du profil 104 de la came 40, de sorte qu'une nouvelle sollicitation parallèlement au plan de la figure 4 du levier 50, pour lui faire prendre sa position instable, amène la palette 44 en contact avec la dent 102, ce qui entraîne un mouvement en sens inverse de l'arbre 8 et le retour du plot 28 dans le creux 75 et donc la remise en place du système dans la position précédente, correspondant à la position de l'éclairage: lanternes et codes allumés.

Le retour en position d'origine (éclairage éteint) de l'arbre à cames 8 est assuré par une came 111 adjacente à la came 36, munie d'un ergot 112 circulant sur le profil de ladite came 36 et percée d'une ouverture oblongue 113 dans laquelle est introduite une clavette 114 solidaire du canon 6 de l'arbre à cames 7. La came 111 a un profil oval qui circule sur une rampe 115 (figure 2) pratiquée dans la paroi interne du boîtier.

Lors du mouvement du levier de manœuvre dans le sens éclairage éteint (éclairage ville), l'ergot 112 de la came de rappel 111 passe au-dessus de la saillie 106 portée par la came 36. Dans le mouvement suivant, éclairage «ville-éclairage route» entraînant une rotation de 90° dans le même sens de la came 111, l'action combinée du profil de la rampe 115 et de la forme oblongue de l'ouverture 113 amène l'ergot 112 au contact du profil bas 105 de la came 36, de sorte que, lors du mouvement de rotation en sens inverse, ledit ergot 112 vienne au contact de la saillie 106 portée par la came 36 pour entraîner celle-ci et lui permettre de retrouver sa position initiale, «ville».

Lors du retour de la position «ville» à la position «éclairage éteint» du levier 50, une rotation de 90° de celui-ci entraîne le canon 6 de l'arbre à cames 7 et, par l'intermédiaire de la clavette 114, la came 111 qui, par l'action de la rampe 115 du boîtier et grâce à la forme oblongue du trou 113, permet à l'ergot 112 de repasser au-dessus de la saillie 106 sans entraîner la came 36.

Le téton 109 de la came 7 reprend alors sa position initiale dans le secteur 110 de la came 11.

La Demanderesse a maintenant posé le problème de perfectionner le commutateur précédemment décrit en assurant la commande d'un feu arrière brouillard en position «route», tout en garantissant que ce feu brouillard ne puisse être alimenté en position «éclairage éteint» et «ville», et ce sans compliquer la structure des commutateurs ni modifier l'encombrement des commutateurs classiques afin de ne pas grever le prix de revient de ceux-ci.

Pour ce faire, la Demanderesse propose de disposer une lame apte à coopérer avec un plot de contact pour former un interrupteur électrique de commande des feux brouillard, en regard de la came de commande des lanternes.

D'autres caractéristiques et avantages de la présente invention apparaîtront à la lecture de la description détaillée qui va suivre et en regard des dessins annexés sur lesquels les figures 1 à 4 ayant déjà été décrites,

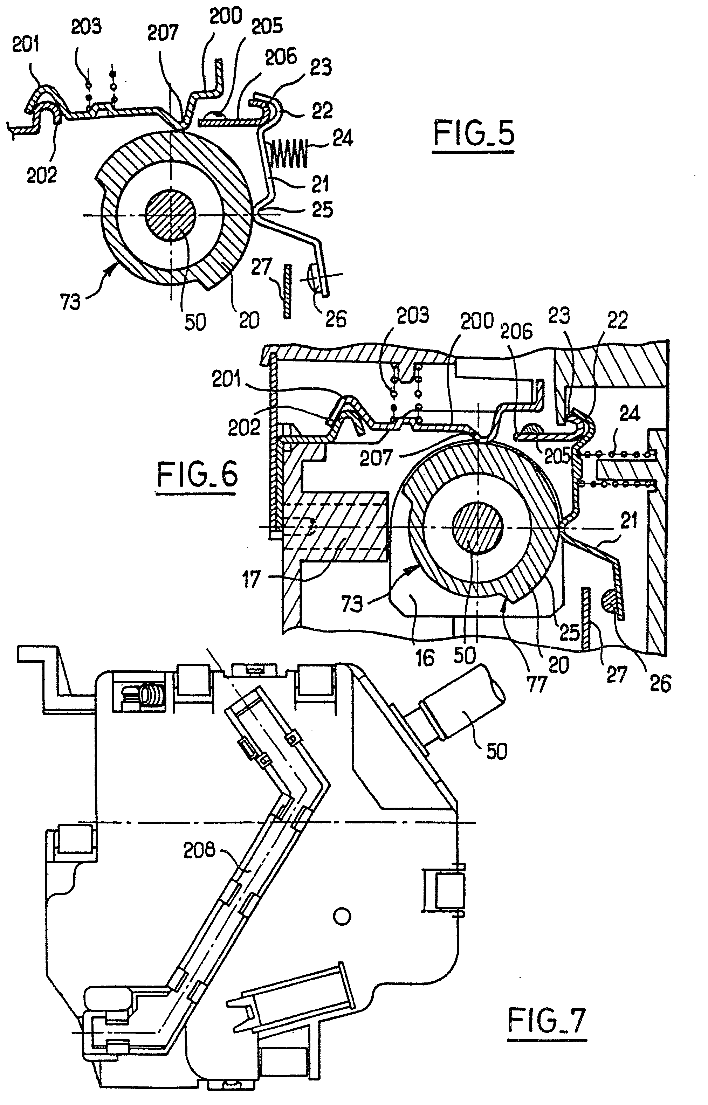

— la figure 5 représente une section d'un commutateur conforme à la présente invention selon un plan de coupe similaire au plan de coupe référencé C-C sur la figure 1,

— la figure 6 représente une vue en coupe du même commutateur conforme à la présente invention selon un plan de coupe C-C identique,

— la figure 7 représente une vue extérieure du commutateur et illustre plus précisément une lame de liaison électrique associée à la lame-interrupteur de commande du feu brouillard.

On reconnaît sur les figures 5 et 6 la came de commande de l'éclairage «lanternes» 20 et la came 16 limitant la rotation de l'arbre à cames 7, toutes deux traversées par le levier 50.

La came 20 est découpée d'un profil bas 73 sur un secteur d'environ 140°.

Une lame articulée 21 dont une extrémité recourbée 22 est maintenue sur une barrette semi-cylindrique 23 s'étendant parallèlement à l'axe du levier (c'est-à-dire perpendiculairement au plan des figures 5 et 6).

La lame articulée 21 s'étend sensiblement tangentiellement à la came 20 et est sollicitée vers celle-ci par un ressort 24. La barrette 23 est reliée à une source de tension positive.

La seconde extrémité de la lame 21 porte un plot 26 qui coopère avec une connexion 27 liée à la sortie de commande de l'éclairage «lanternes».

La lame 21 vient en appui contre la came 20 par l'intermédiaire d'une saillie 25 sur une génératrice de cette came située sensiblement à 65° du bord d'attaque 77 de la came 20, en position d'origine, feux éteints, comme représenté sur les figures.

Ainsi, après rotation de la came 20, à partir de la position d'origine précitée, de 90° en position «ville» et 180° en position «route» dans le sens contraire aux aiguilles d'une montre, selon la représentation des figures 5 et 6, la saillie 25 tombe dans le profil bas 73 et le plot 26 vient en contact avec la connexion 27 pour assurer l'alimentation des lanternes.

De plus, selon l'invention, il est prévu en regard de la came 20 une lame élastique supplémentaire 200 apte à assurer la commande des feux brouillard.

La lame articulée 200 s'étend sensiblement perpendiculairement à la lame 21 de commande des lanternes précitée.

La lame articulée 200 possède une extrémité 201 recourbée maintenue sur une barrette 202 incurvée de façon semi-cylindrique. La barrette 200 s'étend sensiblement tangentiellement à la came 20 et est sollicitée vers celle-ci par un ressort 203.

La seconde extrémité de la lame 200 est adaptée pour venir en contact contre un plot 205 porté par une lamelle 206 solidaire de la barrette 23 précitée et donc reliée à une source de tension positive.

La lame 200 vient en appui contre la came 20 par l'intermédiaire d'une saillie 207, sur une génératrice de cette came 20 située sensiblement à 155° du bord d'attaque 77 de la came 20, en position d'origine feux éteints comme représenté sur les figures.

Ainsi, en position d'origine feux éteints, le profil haut de la came 20 écarte la lame articulée 200 et le plot 205.

L'interrupteur de commande des feux brouillard ainsi formé est donc ouvert.

Il en est de même après rotation de la came 20 de 90° en position «ville», à partir de la position d'origine illustrée sur les figures, dans le sens contraire aux aiguilles d'une montre. De ce fait, en position «ville», l'interrupteur de commande des feux brouillard est maintenu ouvert.

Par contre, après rotation de la came 20 de 180° en position route, à partir de la position d'origine, dans le sens contraire aux aiguilles d'une montre, la saillie 207 de la lame élastique 200 tombe dans le profil bas 73 de la came 20 et la lame 200 est poussée en appui contre le plot 205 par le ressort 203 disposé entre l'extrémité courbée 201 et la saillie 207.

L'interrupteur de commande des feux brouillard est alors fermé.

La lame 202 servant de pivot à la lame de commande des feux brouillard 200 et reliée électriquement à celle-ci au niveau de l'extrémité courbée 201 est reliée à une fiche de connexion pour la commande des feux brouillard par l'intermédiaire d'une lamelle extérieure au boîtier référencée schématiquement 208 sur la figure 7.

A titre de variante, la lame articulée 200 pourra être remplacée par une lame élastique.

## Revendications

1. Commutateur à plusieurs fonctions pour véhicules automobiles permettant de commander, à partir d'un même levier de manœuvre (50) les indicateurs de changement de direction, l'allumage des différentes intensités d'éclairage ainsi que les avertisseurs sonores et lumineux, du type comprenant deux arbres (7, 8) portant une pluralité de cames, traversés axialement par le levier de manœuvre (50), un premier arbre (7) menant étant lié à rotation avec le levier de manœuvre et les deux arbres (7, 8) étant rendus solidaires en rotation avec perte de course relative (109, 110) entre les deux arbres, le levier (50) étant en outre susceptible, par rapport aux arbres, de déplacement axial pour la commande des avertisseurs sonores (52, 55), d'un premier basculement autour d'un point de l'axe pour commander les indicateurs de changement de direction (170) et d'un second basculement dans un plan orthogonal au premier, pour la commande des appels lumineux, une came (12) d'indexage à 3 positions et une came (20) de commande de l'éclairage en position «lanternes» solidaires du premier arbre (7), tandis que le second arbre (8), mené, porte une came (31) de commande de l'éclairage en position «codes», une came (36) de commande de l'éclairage en position «phares», une came (11) d'indexation en position instable du levier, et une came (40) de manœuvre en rotation du second arbre, mené, par rapport au premier arbre menant, la came (40) de manœuvre étant commandée par un cliquet mobile (45) actionné par la partie avant du levier (50) lors du mouvement de basculement instable du levier, *caractérisée par le fait qu*'une lame (200) apte à coopérer avec plot de contact (205) pour former un interrupteur électrique de commande de feux brouillard est disposée en regard de la came (20) de commande des lanternes.

2. Commutateur à plusieurs fonctions selon la revendication 1, caractérisé par le fait que la lame (200) coopérant avec le plot de contact (205) est disposée sensiblement transversalement à une lame (21) de commande des lanternes.

3. Commutateur à plusieurs fonctions selon l'une des revendications 1 et 2, caractérisé par le fait que la came (20) de commande des lanternes comprend un profil bas (73) présentant une ouverture angulaire comprise entre 90° et 180°.

4. Commutateur à plusieurs fonctions, selon la revendication 3, caractérisé par le fait que le profil bas (73) de la came (20) de commande des lanternes présente de préférence une ouverture angulaire de l'ordre de 140°.

5. Commutateur à plusieurs fonctions, selon l'une des revendications 1 à 4, caractérisé par le fait que le plot (205) coopérant avec la lame (200) est relié à une barrette (23) formant articulation pour la lame (21) de commande des lanternes.

6. Commutateur à plusieurs fonctions, selon l'une des revendications 1 à 5, caractérisé par le fait que la lame (200) est articulée.

7. Commutateur à plusieurs fonctions selon l'une des revendications 1 à 5, caractérisé par le fait que la lame (200) est élastique.

8. Commutateur à plusieurs fonctions selon l'une des revendications 1 à 7, caractérisé par le fait que la lame (200) est sollicitée contre la came (20) de commande des lanternes par un ressort (203).

9. Commutateur à plusieurs fonctions selon l'une des revendications 1 à 8, caractérisé par le fait qu'une extrémité incurvée (201) de la lame (200) repose contre une portion incurvée (202) d'une lame de liaison électrique.

10. Commutateur à plusieurs fonctions selon la revendication 9, caractérisé par le fait que la lame de liaison électrique (202) est reliée à une fiche électrique par un conducteur extérieur (208).

## Claims

1. A multi-function switch for automotive vehicles allowing the control by means of a single operating lever (50) of change of direction indicators, of switching on of the different intensities of lighting and of the sound and luminous indicators, of the type comprising two shafts (7, 8) carrying a plurality of cams, crossed axially by the operating lever (50), a first, driving shaft (7) being rotatably connected with the operating lever and the two shafts (7, 8) being connected for rotation with loss of relative motion (109, 110) between the two shafts, the lever (50) further being capable, with respect to the shafts, of axial displacement to control sound indicators (52, 55), of a first rocking around one point of the axis to control the change of direction indicators (170) and of a second rocking in a plane orthogonal to the first to control headlamp flashes, an indexing cam (12) with three positions and a cam (20) for controlling the lighting in the "sidelights" position firmly connected with the first shaft (7), while the second, driven, shaft (8) carries a control cam (31) for the lighting in the "dipped" position, a control cam (36) for the lighting in the "fullbeam" position, an unstable lever position indexing cam (11) and an operating cam (40) for rotating the second, driven shaft with respect to the first, driving shaft, the operating cam (40) being controlled by a mobile pawl (45) actuated by the front part of the lever (50) at the time of the unstable rocking movement of the lever, characterized in that a tongue (200) capable of cooperating with a contact stud (205) to form an electric switch for controlling fog lights is arranged opposite the sidelights control cam (20).

2. A multi-function switch according to claim 1, characterized in that the tongue (200) cooperating with the contact stud (205) is arranged substantially at right angles to a sidelights control tongue (21).

3. A multi-function switch according to claim 1 or claim 2, characterized in that the sidelights control cam (20) comprises a low section (73) having an angular aperture of between 90° and 180°.

4. A multi-function switch according to claim 3, characterized in that the low section (73) of the sidelights control cam (20) preferably comprises an angular aperture of the order of 140°.

5. A multi-function switch according to any one of claims 1 to 4, characterized in that the stud (205) cooperating with the tongue (200) is connected to a bar (23) forming a hinge for the sidelights control tongue (21).

6. A multi-function switch according to any one of claims 1 to 5, characterized in that the tongue (200) is hinged.

7. A multi-function switch according to any one of claims 1 to 5, characterized in that the tongue (200) is resilient.

8. A multi-function switch according to any one of claims 1 to 7, characterized in that the tongue (200) is urged against the sidelights control cam (20) by a spring (203).

9. A multi-function switch according to any one of claims 1 to 8, characterized in that an inwardly bent end (201) of the tongue (200) rests against an inwardly bent portion (202) of an electrical connection tongue.

10. A multi-function switch according to claim 9, characterized in that the electrical connection tongue (202) is connected to an electric plug connecter by an external conductor (208).

## Patentansprüche

1. Multifunktionsschalter für Kraftfahrzeuge, welcher es gestattet, vom gleichen Bedienungshebel (50) aus die Fahrtrichtungsänderungsanzeiger, die Zündung der verschiedenen Intensitäten der Beleuchtung sowie die Schall- und Lichthupe zu steuern, mit
zwei von dem Bedienungshebel (50) axial durchquerte Wellen (7, 8), die eine Vielzahl von Nocken haben, von denen eine erste treibende Welle (7) rotierbar mit dem Bedienungshebel verbunden ist und die beiden Wellen (7, 8), mit relativem leeren Weg (109, 110) zwischen den beiden Wellen, bei der Rotation fest verbunden sind, und der Hebel (50) ferner, in bezug auf die Wellen, geeignet ist,
zur axialen Verschiebung für die Steuerung der Schallhupen (52, 55),
zu einem ersten Schwenken um einen Punkt der Achse zum Steuern der Fahrtrichtungsänderungsanzeiger (170),
und zu einem zweiten Schwenken in einer zum ersten orthogonalen Ebene für die Steuerung der Lichtsignale,
einer Nocke (12) zur Anzeige von 3 Positionen und einer Nocke (20) zur Steuerung der Beleuchtung in der Position „Standlicht",
welche Nocken mit der ersten Welle (7) fest verbunden sind, während die zweite getriebene Welle (8)

eine Nocke (31) zur Steuerung der Beleuchtung in der Position „Abblendlicht",

eine Nocke (36) zur Steuerung der Beleuchtung in der Position „Scheinwerfer",

eine Nocke (11) zur Anzeige in instabiler Position des Hebels,

und eine Nocke (40) zur Betätigung bei Rotation der zweiten getriebenen Welle in bezug auf die erste treibende Welle hat, wobei die Nocke (40) zur Betätigung durch eine bewegliche Klinke (45) gesteuert wird, welche bei der instabilen Schwenkbewegung des Hebels vom vorderen Teil des Hebels (50) angetrieben wird, dadurch gekennzeichnet, dass eine Platte (200), die mit einem Kontaktanschluss (205) zusammenwirken kann, um einen elektrischen Unterbrecher der Steuerung der Nebellichter zu bilden, gegenüber von der Nocke (20) zum Steuern der Standlichter angeordnet ist.

2. Multifunktionsschalter nach Anspruch 1, dadurch gekennzeichnet, dass die Platte (200), die mit dem Kontaktanschluss (205) zusammenwirkt, im wesentlichen transversal zu einer Platte (21) zur Steuerung der Standlichter angeordnet ist.

3. Multifunktionsschalter nach einem der Ansprüche 1 und 2, dadurch gekennzeichnet, dass die Nocke (20) zur Steuerung der Standlichter ein unteres Profil (73) umfasst, das eine Winkelöffnung zwischen 90° und 180° aufweist.

4. Multifunktionsschalter nach Anspruch 3, dadurch gekennzeichnet, dass das untere Profil (73) der Nocke (20) zur Steuerung der Standlichter vorzugsweise eine Winkelöffnung der Grössenordnung von 140° aufweist.

5. Multifunktionsschalter nach einem der Ansprüche 1 bis 4, dadurch gekennzeichnet, dass der mit der Platte (200) zusammenwirkende Anschluss (205) mit einer Schiene (23) verbunden ist, welche eine Anlenkung für die Platte (21) zur Steuerung der Standlichter bildet.

6. Multifunktionsschalter nach einem der Ansprüche 1 bis 5, dadurch gekennzeichnet, dass die Platte (200) angelenkt ist.

7. Multifunktionsschalter nach einem der Ansprüche 1 bis 5, dadurch gekennzeichnet, dass die Platte (200) elastisch ist.

8. Multifunktionsschalter nach einem der Ansprüche 1 bis 7, dadurch gekennzeichnet, dass die Platte (200) durch eine Feder (203) gegen die Nocke (20) zur Steuerung des Standlichte belastet wird.

9. Multifunktionsschalter nach einem der Ansprüche 1 bis 8, dadurch gekennzeichnet, dass ein gekrümmtes Ende (201) der Platte (200) gegen einen gekrümmten Teil (202) einer elektrischen Verbindungsplatte anliegt.

10. Multifunktionsschalter nach Anspruch 9, dadurch gekennzeichnet, dass die elektrische Verbindungsplatte (202) durch eine äussere Leitung (208) mit einem elektrischen Stecker verbunden ist.

0 194 917

FIG.1  Etat de la technique  FIG.2

FIG.3a  SECTION AA

FIG.3e  SECTION EE

FIG.3b  SECTION BB

FIG.3f  SECTION FF

FIG.3c  SECTION CC

FIG.3g  SECTION GG

FIG.3d  SECTION DD

FIG.3h  SECTION KK

9

# Etat de la technique

## FIG. 4

0 194 917

FIG_5

FIG_6

FIG_7

13